Europäisches Patentamt

European Patent Office

Office européen des brevets

(19)

(11) Numéro de publication : **0 179 698**
**B1**

(12)

# FASCICULE DE BREVET EUROPÉEN

(45) Date de publication du fascicule du brevet :
03.01.90

(51) Int. Cl.⁵ : **B 60 K 17/356, B 62 D 59/02**

(21) Numéro de dépôt : 85401904.9

(22) Date de dépôt : 01.10.85

(54) Dispositif d'assistance motrice d'un véhicule.

(30) Priorité : 03.10.84 FR 8415197

(43) Date de publication de la demande :
30.04.86 Bulletin 86/18

(45) Mention de la délivrance du brevet :
03.01.90 Bulletin 90/01

(84) Etats contractants désignés :
DE GB IT SE

(56) Documents cités :
DE--A-- 2 112 327
FR--A-- 1 359 845
GB--A-- 808 846
US--A-- 3 811 525

(73) Titulaire : POCLAIN HYDRAULICS Société Anonyme
de droit français
Boîte Postale no 12
F-60410 Verberie (FR)

(72) Inventeur : Fontaine, Jacques Pierre
33, rue du Port
F-60410 Verberie (FR)

(74) Mandataire : Hoisnard, Jean-Claude et al
Cabinet Beau de Lomenie 55, rue d'Amsterdam
F-75008 Paris (FR)

## Description

On connaît déjà des véhicules équipés d'un ensemble d'entraînement principal de certains de leurs organes de déplacement et d'un dispositif auxiliaire permettant, dans certaines conditions difficiles de déplacement, d'entraîner d'autres organes de déplacement d'un même véhicule, pour améliorer l'entraînement en ASSISTANT l'ensemble d'entraînement principal.

Il convient d'ailleurs d'observer que, par « Assistance », il faut bien entendu comprendre une amélioration de la faculté motrice du véhicule à se déplacer dans un certain sens, mais aussi la dotation de ce véhicule d'une faculté de retenue, facilitant son contrôle, notamment en descente.

US-A-3 811 525 décrit un tel véhicule connu, dont la définition est rappelée dans le préambule de la revendication 1.

L'art antérieur connu utilise des circuits couteux, car les organes de distribution du fluide d'assistance doivent avoir des dimensions importantes permettant de transmettre la totalité du débit du fluide d'assistance.

L'invention a pour but de remédier à cet inconvénient en proposant les dispositions simples, efficaces et bon marché qui sont définies dans la partie caractérisante de la revendication 1.

Les avantageuses dispositions suivantes sont, en outre, préférées :

un distributeur à au moins deux positions est raccordé, d'une part audit conduit de refoulement de la pompe auxiliaire, d'autre part auxdits raccords principaux par des premier et deuxième conduits de liaison, respectivement, une première de ces deux positions correspondant à la mise en communication du conduit de refoulement avec ledit premier conduit de liaison, la deuxième desdites positions correspondant à la mise en communication du conduit de refoulement avec le deuxième conduit de liaison ;

ledit distributeur comporte une troisième position, qui correspond à la mise en communication du premier conduit de liaison et du deuxième conduit de liaison avec un échappement sensiblement sans pression.

Les avantages des nouvelles dispositions préconisées sont en rapport avec la simplicité des circuits, les composants utilisés sont peu coûteux, et, la réalisation utilisant une pompe à cylindrée constante, la cylindrée de cette pompe est faible, de l'ordre de 10 % de celle du ou des moteurs hydrauliques d'assistance.

L'invention sera mieux comprise, et des caractéristiques secondaires et leurs avantages apparaîtront au cours de la description d'une réalisation donnée ci-dessous à titre d'exemple.

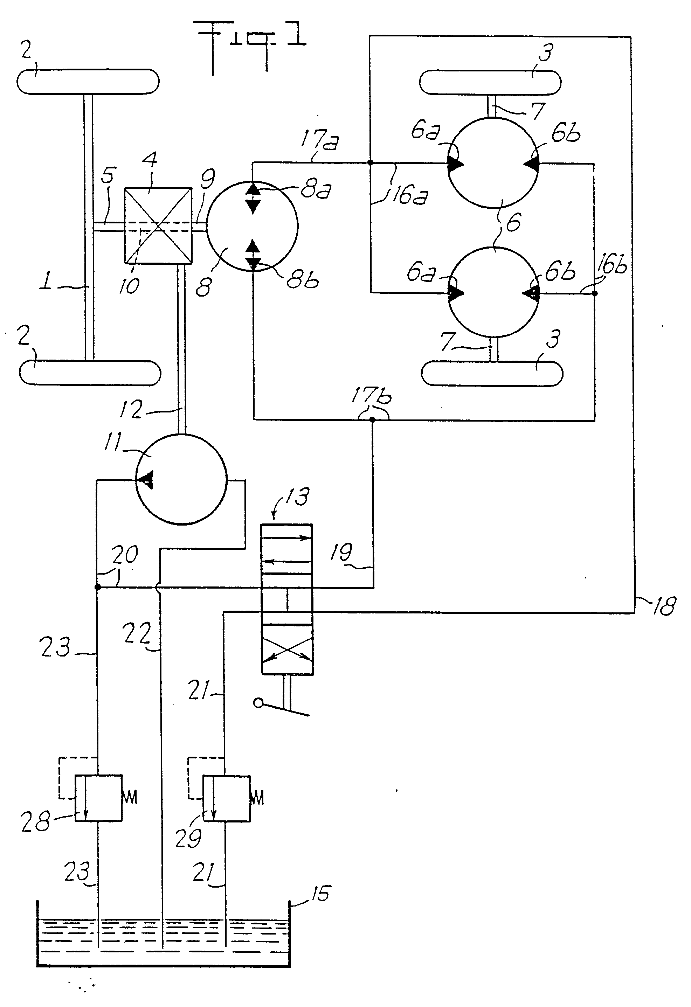

Il est entendu que la description et le dessin ne sont donnés qu'à titre indicatif et non limitatif.

Il sera fait référence au dessin annexé, dans lequel la figure représente le circuit d'une réalisation d'un dispositif d'assistance conformé à l'invention.

Le schéma de la figure représente l'ensemble d'entraînement des roues d'un camion et comprend :

un pont arrière moteur 1, auquel sont attelées les roues arrière 2 ;

les roues avant 3, indépendantes ;

un moteur thermique 4, type « Diesel », dont l'arbre principal de sortie 5 est attelé au pont moteur 1 ;

deux moteurs hydrauliques 6, munis d'arbres de sortie 7, chaque roue avant 3 étant attelée en rotation à l'arbre de sortie 7 d'un des deux moteurs hydrauliques 6 ;

un mécanisme hydraulique réversible 8, susceptible de fonctionner en moteur et en pompe selon les circonstances, muni de deux raccords principaux 8a et 8b ;

une « prise de force » 9, constituée par un arbre d'entraînement attelé aux roues arrière 2 par une liaison schématisée par l'arbre 10 le reliant à l'arbre principal de sortie 5 du moteur thermique 4, qui lui confère une vitesse de rotation proportionnelle à celle des roues arrière 2 ;

une pompe auxiliaire 11, dont l'arbre d'entraînement 12 est relié au moteur thermique 4 et a un entraînement indépendant de celui des roues arrière 2 ;

un distributeur de fluide 13 à trois positions ; et

un réservoir de fluide 15.

Divers conduits et clapets sont prévus. Il s'agit :

des conduits 16a reliant en parallèle des premiers raccords principaux 6a des moteurs hydrauliques 6, qui sont de type réversibles ;

des conduits 16b reliant en parallèle des deuxièmes raccords principaux 6b des moteurs hydrauliques 6 ;

des conduits 17a, 17b reliant les raccords principaux 8a, 8b du mécanisme hydraulique 8 aux conduits 16a, 16b, respectivement ;

des conduits 18, 19 reliant le distributeur 13 aux conduits 17a, 17b, respectivement ;

le conduit de refoulement 20 de la pompe auxiliaire 11 est raccordé au distributeur 13, un conduit de décharge 21 reliant ce distributeur au réservoir 15 ;

le conduit d'aspiration 22 de cette pompe 11 la relie au réservoir 15 ;

un conduit 23 relie le conduit de refoulement 20 au réservoir 15 ;

des clapets de décharges tarés 28, 29 sont disposés sur les conduits 23, 21 respectivement, et ont, par exemple, des tarages respectifs de 300 et 10 bars.

Les trois positions du distributeur 13 correspondent :

la première position, aux mises en communication des conduits 20 et 19, et, des conduits 21 et 18 ;

la deuxième position, à la mise en communication des conduits 18, 19, 20 et 21 ; et

la troisième position, aux mises en communication des conduits 20 et 18, et, des conduits 21 et 19.

Les précisions suivantes doivent être données :

le mécanisme réversible 8 a une cylindrée constante et son débit, lorsqu'il est entraîné par la « prise de force » 9, est compris approximativement entre 0,90 fois et 0,95 fois la somme des débits avec lesquels il faudrait alimenter les moteurs hydrauliques 6 pour faire en sorte que les vitesses linéaires de déplacement des roues avant 3 soient égales à celles des roues arrière 2 ;

la pompe auxiliaire 11 a un débit qui doit être apte à compléter, approximativement à une fois ladite somme des débits des moteurs hydrauliques 6, le débit du mécanisme réversible 8, et donc a un débit approximativement égal à 0,15 à 0,10 fois la somme des débits avec lesquels il faudrait alimenter les moteurs hydrauliques 6 pour que les vitesses linéaires de déplacement des roues avant 3 soient égales à celles des roues arrière 2.

Le fonctionnement de la réalisation décrite va maintenant être exposé.

Lors d'un déplacement normal, sans assistance ni retenue, le camion a ses roues arrière 2 entraînées par le pont 1 et le moteur thermique 4. S'il n'y a pas besoin d'agir avec la motricité des roues avant 3, le distributeur 13 est placé dans sa deuxième position, de sorte que les moteurs hydrauliques 6 ne produisent aucun effort, ni moteur, ni de retenue significatif.

Si le conducteur du camion souhaite améliorer la motricité de son engin, il place le distributeur 13 dans celle de ses première et troisième positions, dans laquelle le complément de fluide sous pression refoulé par la pompe auxiliaire 11 est dirigé vers les raccords principaux 6a, ou 6b des moteurs 6, qui permettent à ces moteurs, par ailleurs alimentés principalement par le mécanisme réversible 8, d'entraîner les roues avant 3 en les rendant motrices et en ajoutant leurs efforts de propulsion à celui des roues arrière 2.

Si au contraire le conducteur souhaite freiner son engin en lui appliquant un effort de retenue, il lui suffit, avec le même sens de déplacement que précédemment, de placer le distributeur 13 dans la position complémentaire — troisième ou première position — de la précédente. Alors, la pression la plus élevée est située dans les raccords 6b ou 6a des moteurs 6, opposés des précédents. Ces moteurs travaillent en retenue, freinant le camion qui les entraîne en rotation.

Il convient d'observer que le changement de fonctionnement d'assistance à retenue, et inversement, est réalisé par la combinaison des effets de la petite pompe auxiliaire 11 (débit égal à 0,10 à 0,15 fois le débit principal d'alimentation des moteurs hydrauliques 6) et du petit distributeur 13, apte à contrôler le débit de la pompe auxiliaire 11, c'est-à-dire par adoption de composants peu coûteux.

## Revendications

1. Dispositif d'assistance motrice d'un véhicule comprenant au moins deux groupes d'organes de déplacement avant (3) et arrière (2), un ensemble (4-5-1) d'entraînement des organes de déplacement d'un premier (2) de ces deux groupes, et une « prise de force » (9) constituée par un arbre d'entraînement susceptible d'avoir une vitesse de rotation proportionnelle (10) à la vitesse des organes d'entraînement appartenant audit premier groupe (2), ce dispositif d'assistance comprenant :

au moins un moteur hydraulique (6) d'entraînement des organes de déplacement du deuxième groupe (3),

un mécanisme réversible (8) — moteur/pompe — qui est attelé à l'arbre d'entraînement (9) de la « prise de force » et est muni de deux raccords principaux (8a, 8b) reliés par deux conduits principaux (17a, 17b) aux deux raccords principaux (6a, 6b) dudit au moins un moteur hydraulique (6), et

une pompe auxiliaire (11) qui est attelée à un organe d'entraînement (12) indépendant par rapport aux organes de déplacement du premier groupe (2) et qui a un conduit de refoulement (20) relié à l'un des deux raccords principaux (6a, 6b) du moteur,

caractérisé en ce que, d'une part, le mécanisme réversible (8) est à cylindrée constante et son débit de refoulement est compris entre 0,90 et 0,95 fois celui d'alimentation du ou des moteurs hydrauliques (6) correspondant à un entraînement des organes de déplacement du deuxième groupe (3) à la même vitesse que celle des organes de déplacement du premier groupe (2), d'autre part, le débit de la pompe auxiliaire (11) de mise en pression est compris 0,15 et 0,10 fois celui d'alimentation du ou des moteurs hydrauliques (6) pour un entraînement desdits organes de déplacement du deuxième groupe (3) à la même vitesse que celle des organes de déplacement du premier groupe.

2. Dispositif selon la revendication 1, caractérisé en ce qu'un distributeur (13) à au moins deux positions est raccordé, d'une part audit conduit de refoulement (20) de la pompe auxiliaire (11), d'autre part auxdits raccords principaux (6a, 6b) par des premier et deuxième conduits de liaison (18-17a ; 19-17b), respectivement, une première de ces deux positions correspondant à la mise en communication du conduit de refoulement (20) avec ledit premier conduit de liaison (18), la deuxième desdites positions correspondant à la mise en communication du conduit de refoulement (20) avec le deuxième conduit de liaison (19).

3. Dispositif selon la revendication 2, caractérisé en ce que ledit distributeur (13) comporte une troisième position, qui correspond à la mise en communication du premier conduit de liaison (18) et du deuxième conduit de liaison (19) avec un échappement sensiblement sans pression (21).

## Claims

1. Device for assisting the driving of a vehicle comprising at least two groups of front (3) and rear (2) displacement members, a drive assembly (4-5-1) for the displacement members of a first (2) of said two groups, and a « power take-off » element (9) consisting of a drive shaft adapted to run at a proportional rotational speed (10) to the speed of the drive members belonging to said first group (2), said device comprising the following :

at least one hydraulic motor (6) for driving the displacement members of the second group (3),

a reversible mechanism (8) — motor/pump — which is coupled to the drive shaft (9) of the « power take-off » element and is equipped with two main connections (8a, 8b) joined by two main lines (17a, 17b) to the two main connections (6a, 6b) of said at least one hydraulic motor (6), and

an auxiliary pump (11) which is coupled to a drive member (12) independent with respect to the displacement members of the first group (2) and which has a return line (20) connected to one of the two main motor connections (6a, 6b), characterised in that, on the one hand, the reversible mechanism (8) has a constant volumetric displacement and its return delivery output is between 0.90 and 0.95 times that of its supply to the hydraulic motor(s) (6) corresponding to driving the displacement members of the second group (3) at the same speed as that of the displacement members of the first group (2), and, on the other hand, the output of the pressurising auxiliary pump (11) is between 0.15 and 0.10 times that of its supply to the hydraulic motor(s) (6) for driving said displacement members of the second group (3) at the same speed as that of the displacement members of the first group.

2. Device according to claim 1, characterised in that a distributor (13) having at least two positions is connected on the one hand to said return line (20) of the auxiliary pump (11) and on the other hand to said main connections (6a, 6b) by first and second connecting lines (18-17a ; 19-17b) respectively, a first of these two positions corresponding to making the return line (20) communicate with said first connecting line (18), the second of said positions corresponding to making the return line (20) communicate with the second connecting line (19).

3. Device according to claim 2, characterised in that said distributor (13) has a third position which corresponds to making the first connecting line (18) and the second connecting line (19) communicate with a substantially pressureless outlet (21).

**Patentansprüche**

1. Antriebsunterstützungseinrichtung für ein Fahrzeug mit wenigstens zwei Gruppen vorderer (3) und hinterer (2) Bewegungseinrichtungen, mit einer Anordnung (4-5-1) zum Antrieb der Bewegungseinrichtungen einer ersten (2) der beiden Gruppen und mit einem « Kraftschluß » (9), der von einer Antriebsachse gebildet wird, die für eine zur Geschwindigkeit der der ersten Gruppe (2) zugehörigen Antriebseinrichtungen proportionale (10) Drehgeschwindigkeit geeignet ist, wobei die Unterstützungseinrichtung

wenigstens einen Hydraulikmotor (6) zum Antrieb der Bewegungseinrichtungen der zweiten Gruppe (3),

einen Umschaltmechanismus (8) — Motor/Pumpe —, der an die Antriebsachse (9) des « Kraftschlusses » angekoppelt und mit zwei Hauptverbindungselementen (8a, 8b) versehen ist, wobei die zwei Hauptverbindungselemente mittels zweier Hauptleitungen (17a, 17b) mit zwei Hauptverbindungselementen (6a, 6b) des wenigstens einen Hydraulikmotors (6) verbunden sind, und

eine Hilfspumpe (11), die an eine in bezug auf die Bewegungseinrichtungen der ersten Gruppe (2) unabhängige Antriebseinrichtung (12) angekoppelt ist und eine mit einem der beiden Hauptverbindungselemente (6a, 6b) des Motors verbundene Förderleitung (20) enthält, aufweist, dadurch gekennzeichnet, daß einerseits der Umschaltmechanismus (8) einen konstanten Hubraum besitzt, dessen Fördermenge zwischen dem 0,90-fachen und dem 0,95-fachen der Beschickungsmenge des oder der Hydraulikmotoren (6) liegt, was einem Antrieb der Bewegungseinrichtungen der zweiten Gruppe (3) mit der gleichen Geschwindigkeit wie die der Bewegungseinrichtungen der ersten Gruppe (2) entspricht, und andererseits die zu komprimierende Menge der Hilfspumpe (11) zwischen dem 0,15-fachen und dem 0,10-fachen der Beschickungsmenge des oder der Hydraulikmotoren (6) liegt, um die Bewegungseinrichtungen der zweiten Gruppe (3) mit der gleichen Geschwindigkeit wie die der Bewegungseinrichtungen der ersten Gruppe anzutreiben.

2. Einrichtung gemäß Anspruch 1, dadurch gekennzeichnet, daß ein Verteiler (13) an wenigstens zwei Positionen einerseits mit der Förderleitung (20) der Hilfspumpe (11) und andererseits über erste bzw. zweite Verbindungsleitungen (18-17a ; 19-17b) mit den Hauptverbindungselementen (6a, 6b) verbunden ist, wobei eine erste der beiden Positionen der Herstellung einer Verbindung der Förderleitung (20) mit der ersten Verbindungsleitung (18) und die zweite der Positionen der Herstellung einer Verbindung zwischen der Förderleitung (20) und der zweiten Verbindungsleitung (19) entspricht.

3. Vorrichtung gemäß Anspruch 2, dadurch gekennzeichnet, daß der Verteiler (13) eine dritte Position aufweist, die der Herstellung einer Verbindung zwischen der ersten Verbindungsleitung (18) und der zweiten Verbindungsleitung (19) mit einem exakt drucklosen Auslaß (21) entspricht.

Fig.1